Europäisches Patentamt

European Patent Office

Office européen des brevets

(11) Publication number: **0 482 234 A1**

# EUROPEAN PATENT APPLICATION

(21) Application number: **90120382.8**

(22) Date of filing: **24.10.90**

(51) Int. Cl.5: **B60R  16/02**

(43) Date of publication of application:
**29.04.92 Bulletin  92/18**

(84) Designated Contracting States:
**DE FR GB IT**

(71) Applicant: **ROBOMATIC S.a.s.**
**Via Baltimora 61**
**I-10137 Torino(IT)**

(72) Inventor: **Cavaglia, Matteo**
**Via Baltimora 61**
**I-10137 Torino(IT)**

(54) **Electromagnetic signal transmission system on a road vehicle.**

(57) Electromagnetic energy and data exchange between a remote control unit (D) and a keyboard (A) mounted on a steering wheel, without any type of electric contact, therefore realizing a complete galvanic insulation between keyboard on steering wheel and the body of vehicle.

This is achieved with an electromagnetic coupling, by means of two simple structures designed on Printed Circuit Boards (PCB), the first one (C1) mounted stationary and faced to the other one (C2), mounted on the steering wheel and so rotating with it.

A control unit (B), mounted inside the steering wheel, (and/or embodied with the keyboard), able to receive the electromagnetic energy, to manage the keyboard and to code and transmit data to the remote control unit (D), via the same electromagnetic coupling (C1 + C2). The remote control unit (D), mounted onto vehicle, in any appropriate site, able to supply energy to the steering wheel, to decode data received via the same electromagnetic coupling (C1 + C2); it also provides anti-error circuits, it manages the received informations, in order to switch reliably a variety of loads on board vehicle; this function can also be performed by means of special power modules, always implemented on the remote control, able to drive even heavy loads, as halogen lamps, motors for windscreen brushes, etc.

Moreover, these power modules contain special arrangements to detect short circuits and excessive dissipation, in order to eliminate and replace, with reliable solid-state technology, some trouble-affected devices, like electromagnetic relays and fuses.

Rank Xerox (UK) Business Services

(-/2.17/2.0)

## Background art

The chance to get pushbutton switches or other commands on the steering wheel was limited, in the past, by the use of cables and wires to connect switching elements with remote units: while steering the drive wheel, the wires enveloped around the wheel shaft, with the raise of hard problems of reliability and space.

Nevertheless, quite recent studies about ergonomics and safety suggest the necessity to place all the drive commands - both main and peripheral (these last ones fast increasing, in number and fuctions) - in such position to avoid the driver to release hands away from the steering wheel to reach them.

From this point of view, the central part of the steering wheel is an ideal place to locate drive commands and here is the rising interest about systems able to implement, with new technologies which overcome problems, these fuctions in a simple and better way.

The state-of-the-art about this matter, is found with the U.S. Patent N°4,608,550, dated August 26,1986, inventors K. Umebayashi and N. Suzamura and the following German Patent N°DE 3228623 C2, dated July 30, 1987, same inventors; other patents of the same family.

This patent's family is characterized by a mechanical system able to keep stationary the keyboard even steering the drive wheel: the transmission of energy and data is performed with slip rings and brushes (in some embodiements) or with two separate couples of electric coils (in other embodiements) or with a combination of the two systems described above.

Moreover, the data transmission is performed with FSK modulation.

Altough very good from a technical point of view, the systems described seem to be difficult for industrial applications, essentially due to the complexity and therefore for costs; moreover, systems based on slip rings and brushes are not so reliable, particularly in terms of "working life".

Surely better is system using two couple of coils, but it's not so easy to implement, quite expensive and it needs some space, not always available into a steering wheel structure.

## Disclosure of invention

The system in object overcome the problems described above and also other problems, concerning:
- growing complexity and costs about pencil of wires and cables mounted on vehicle, in particular between steering wheel and remote units;
- reliability and costs of those electromechanic switches grouped and assembled around the steering shaft, to drive some utilities of the vehicle (lights, windscreen brushes and wiper, warnings, etc.);
- reliability and intrinsic quality problems about electromechanic actuators (relays) and protectors (fuses).

The most important items which characterize our system and we consider to be an inventive step (almost for such transmission systems on vehicle) are:
- the exchange of electric energy and data between a steering wheel keyboard and a remote control unit, implemented without any contact or connection (and therefore with galvanic insulation), realized with only one couple of simple printed circuit boards, the first one mounted on the fixed part around the steering shaft and the other one, faced to the first one, mounted on the steering wheel. To realize this system, we had to solve a lot of technical problems, but the results are: system very "simple" (only two, not sophisticated components), easy to mount, low cost, reliable and safe;
- to trasmit data, no need for sophisticeted and expensive modulation systems, like FSK, PSK, PWM or others: the simplest, low cost, Amplitude Modulation ( AM ) is well enough - in our project - to perform a trouble-free data transmission;
- the power modules, able to drive even heavy resistive and inductive loads, realized with N-channel MOSFET transistors. Let us note that, as in vehicles the low side of the supply (negative pole) is grounded, is usually necessary to get more expensive, P-channel transistors to perform solid-state power switching;
- the feature of current monitoring for each module, to disable the switch if an extra current or short circuit occurs, at any time. The use of these power modules lets to eliminate relays and fuses, which are sometimes sources of troubles and maintenance operation.
- Altough primarily designed to be embodied into the control unit, these power modules can be as well mounted one-by-one near (or embodied with) the load they have to drive, according to the recent developments of single cable, multiplexed systems, conceived to replace the hundreds meters of copper wires which run all around the vehicle, and which quantity and complexity is always growing up. In effect, the whole architecture of the system in object is easily joining with multiplexed and single cable systems, because they have the same technical philosophy and structure.

## Brief description of drawings

More specific objects will be apparent from the following specifications and drawings in which:
- Fig. 1 is a view of objects which arrange the overall system;
- Fig. 2a & 2b are examples of arrangements about the functions and the design of the keyboard;
- Fig. 3 is a block diagram of the overall system;

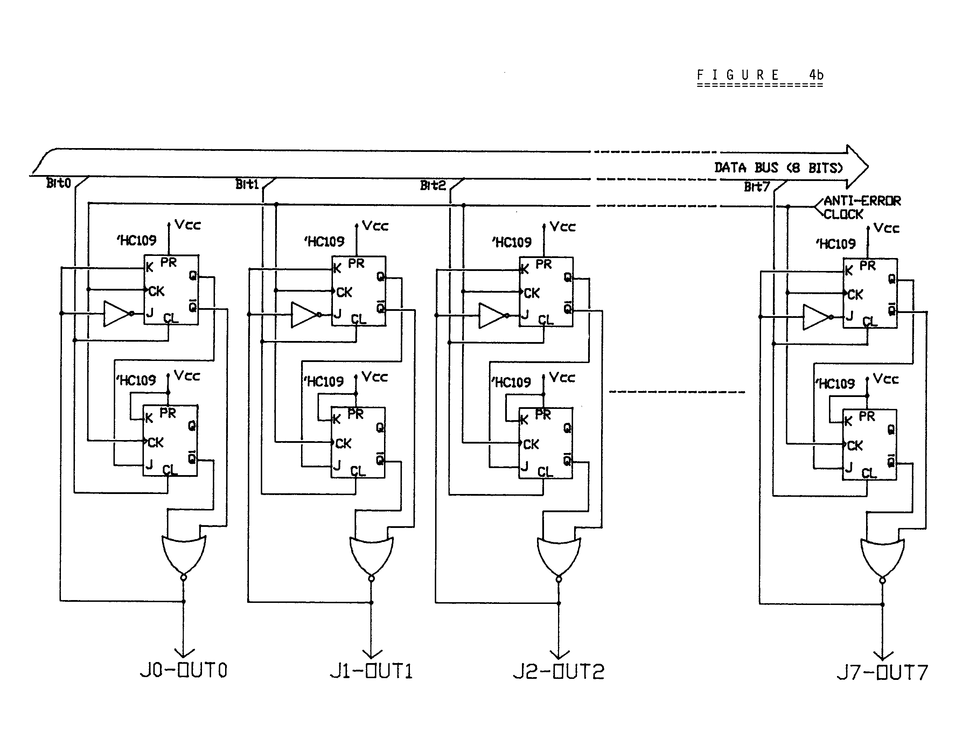

- Fig. 4 is a circuit diagram of the section (belonging to the remote control unit) designed to send energy and to receive and decode data. There are also anti-error circuits, for error-free operations;

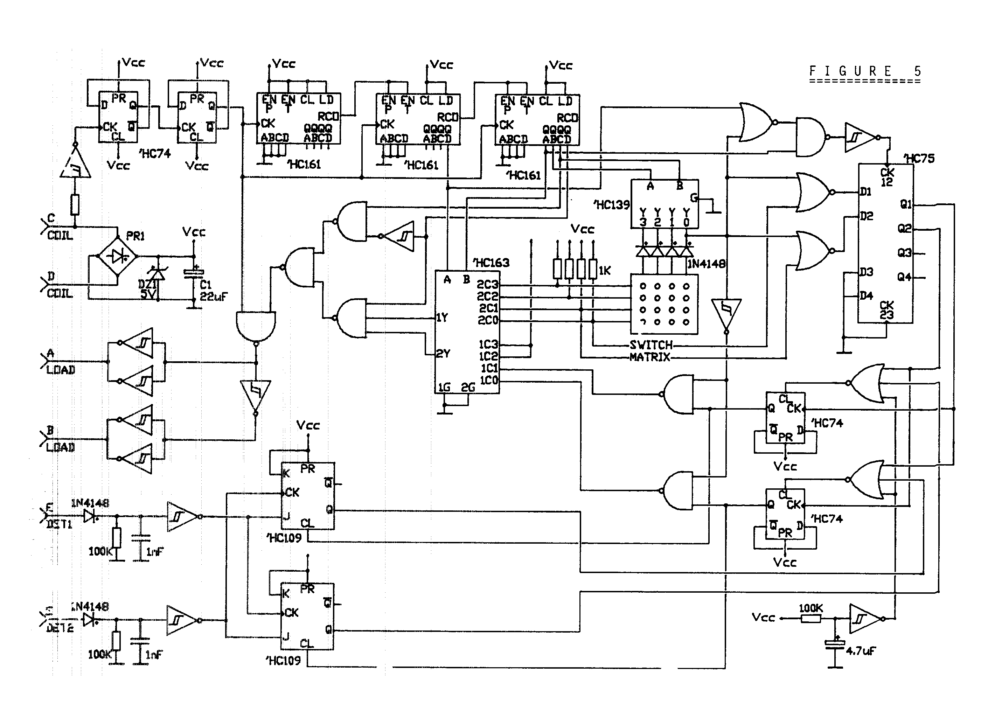

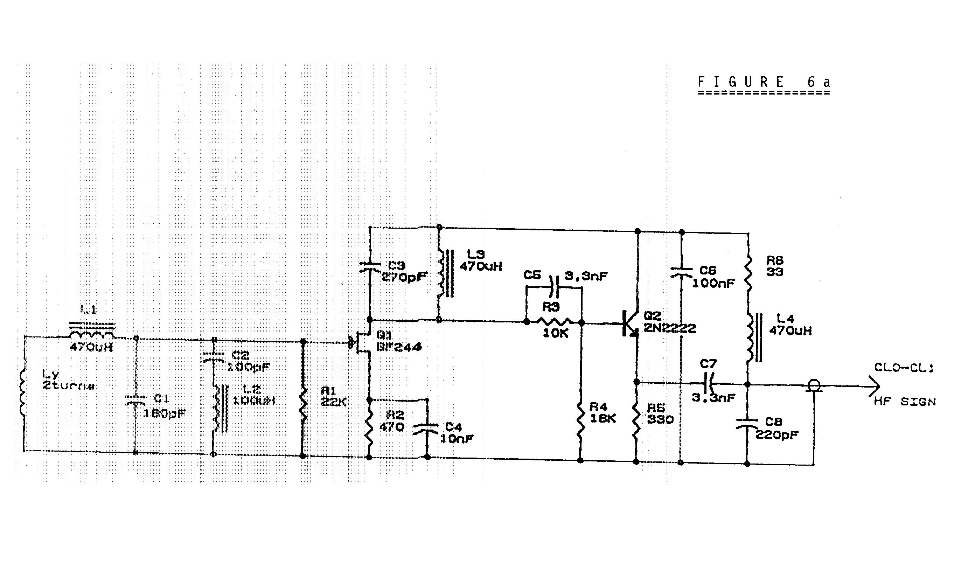

- Fig. 5 is a circuit diagram of the control unit embodied into the steering wheel;

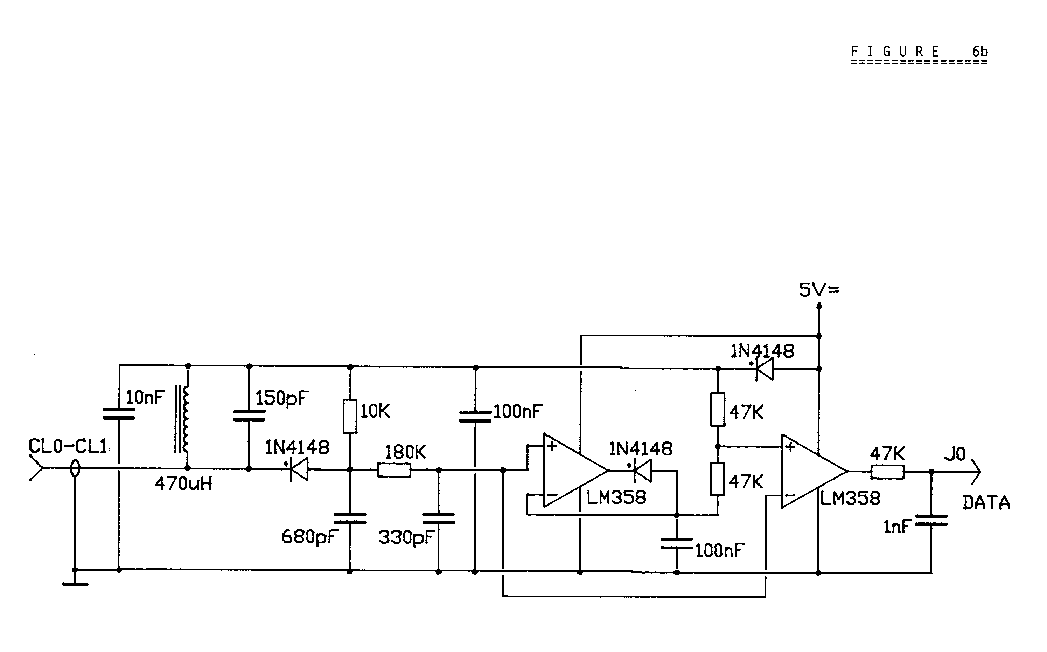

- Fig. 6a is a circuit diagram of the preamplifier section embodied into the electromagnetic coupler (C2);
- Fig. 6b is a circuit diagram of the demodulator section (remote control unit);

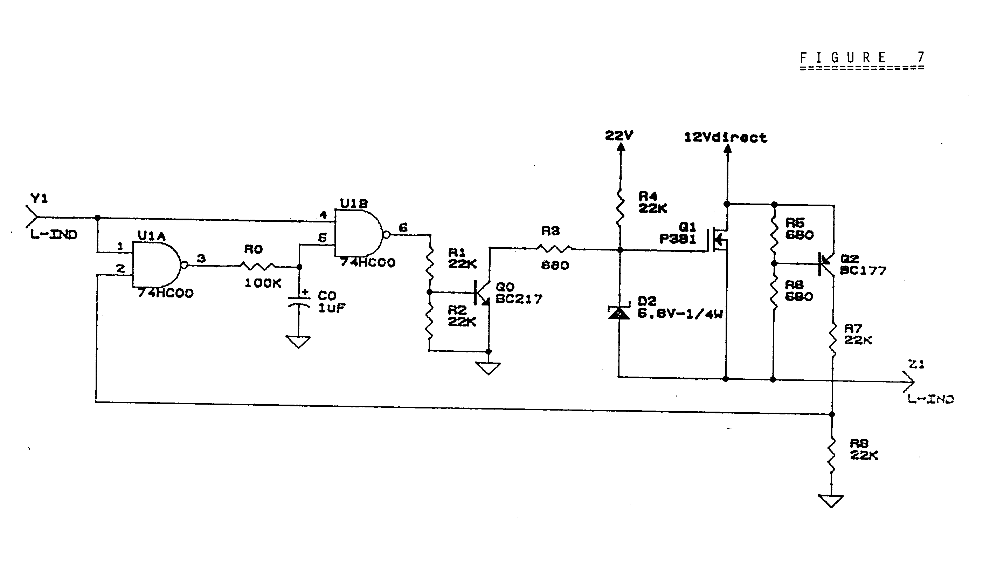

- Fig. 7 is a circuit diagram of the power switch module.

## Detailed description of the system

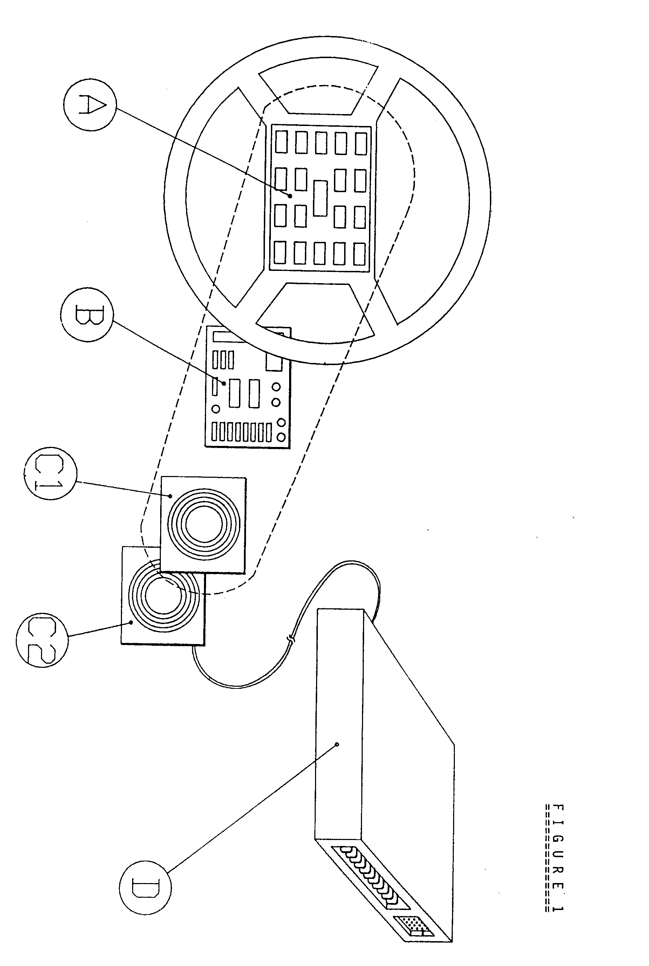

Let's begin to analyse the system, referring to figure 1, 2a & 2b, and 3:

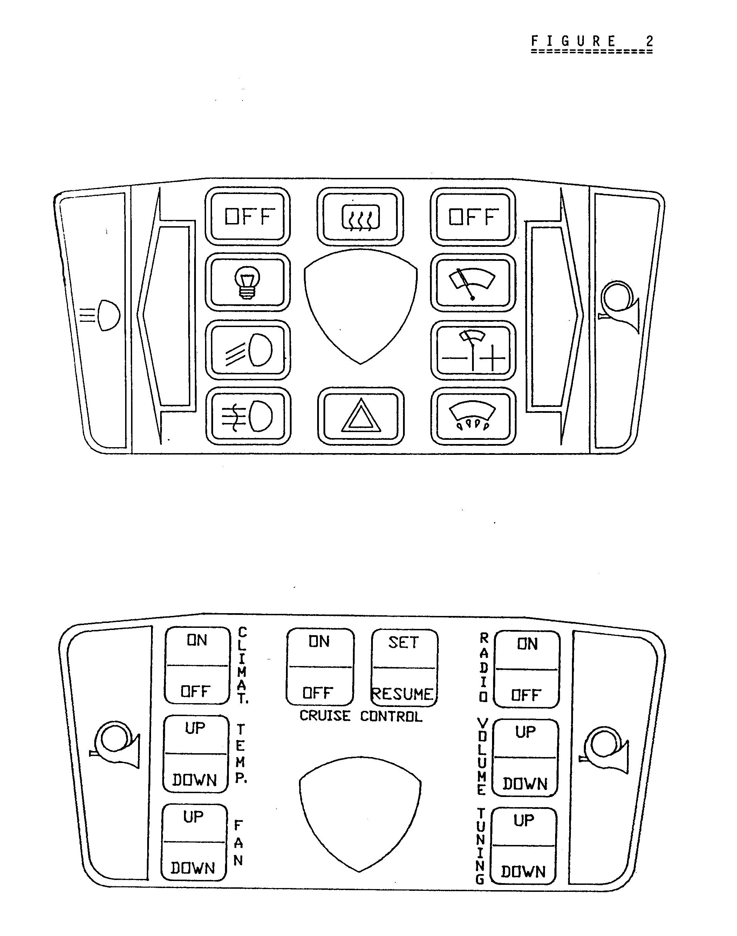

(A) - The keyboard - It is placed on the central part of the steering wheel in such way to be easily reached by the driver, although it can be placed on any other part of the wheel, with no limitation than the fantasy; the same considerations can be made for the switches, which can have any kind of shape and size. Even for the number of switches and therefore of functions, the system lets to expand them as wide as desired. In order to ergonomics and space considerations, we hypothize a maximum of 16 swithes: fig. 2a & 2b show two exemples of how is possible to implement different functions, with different arrangements and design.

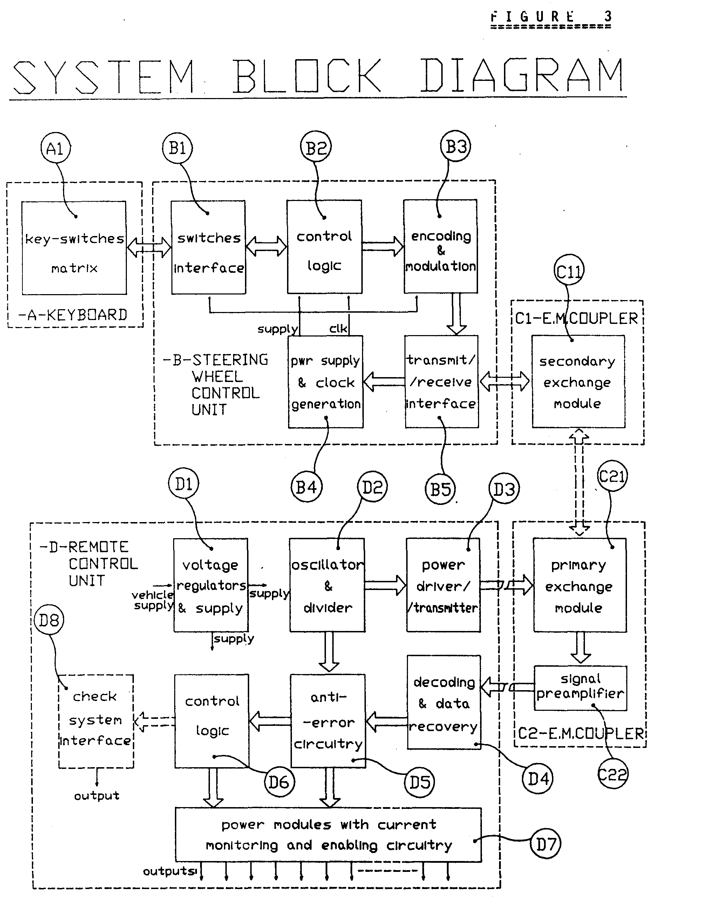

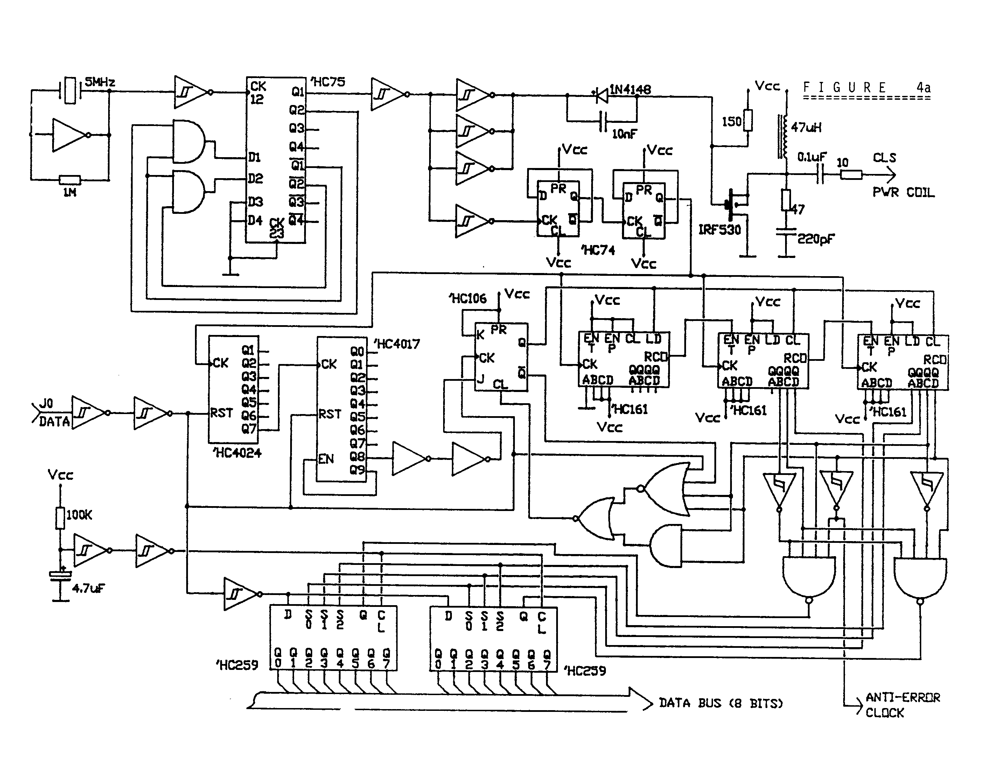

Besides, any kind of technology can be used to build the switches and keyboard:typically, the keyboard is configured as a key-switch matrix (see fig. 3, block A1).

Let's note that, although we consider to use the system for switches-driver functions only, as some hundreds of milliwatts become available on steering wheel, we can implement on it also LCD display, LED's, buzzers, loudspeakers and any other electronic low poker component.

(B) - The steering wheel control unit - It's a solid state, electronic digital control, based on C-MOS technology: typically, it's realized on a Printed Circuit Board (PCB) that can be stand-alone or embodied with the keyboard.
It performs the following fuction (figure 3):
- interface between the keyboard and the control logic (B1);
- control logic, which generates drive signals for the keyboard, receives and controls the status of all the switches (B2);
- encoding of data received from control logic, in order to serialize them, according to the transmission protocol (B3); modulation of the carrier wave (B3), performed with A.M. technique, through the interface block;
- interface circuitry, able to pick up energy from and to trasmit (B5) to the same module (C11) the encoded data;
- a circuit section, able to convert the received energy in appropriate, regulated d.c. voltage, which is used to supply the whole unit (B4); at the same time, a signal is derivated from the energy carrier and it's used, after conditioning, as a clock from the control logic.

(C1) - Electromagnetic coupler - It is a simple PCB (C11) on which is designed a structure, winding-like, able to exchange energy and data with the other electromagnetic coupler (C2).

The couplers can be considered both as "primary" and "secondary" windings of a trasformer, and as well as two antennas, belonging to systems able to transmit and receive: we prefer to consider them as windings of a transformer, and therefore we name them "secondary" exchange module (C11) and "primary" exchange module (C2).

The energy exchange is a achieved simply facing the modules one in front of the other: this module (C1) is mounted on steering wheel and therefore it moves while steering.

(C2) - Electromagnetic coupler - It is a simple PCB (C21) on which is designed a structure, winding-like, able to exchange energy and data with the other electromagnetic coupler (C1). As regards the function (C21), see the above considerations made for (C1).

On the same PCB, we implemented another function: a signal preamplifer (C22), able to demodulate coded data from the carrier wave and to pre-amplify them, also lowering their impedance, in order to make the transmission to remote control unit safe and noise insensitive.

This module (C2) is mounted on the fixed structure around the steering shaft and therefore it stands even while steering the wheel.

(D) - Remote control unit - It is a solid state electronic control, based on C-MOS technology and realized on PCB: it can be mounted anywhere onto vehicle, in an appropriate site. It performs the following functions:

- connected with vehicle supply, it generates the regulated voltages and supplies necessary for all functions of the unit (D1);
- it generates a basic frequency and, through proper chains of dividers and counters (D2), it generates consequently all frequencies requested to transmit energy and to process data by other circuit blocks;
- through a power driver stage (D3), it transmits energy to the exchange modules;
- it receives encoded data streams, which are decoded and recovered (D4);
- it provides anti-error circuits, where the received data must be valid only if correctly confirmed twice or, if necessary, four times (D5);
- if necessary, some specific logic circuits provide to process data, in order to accomplish requested waveforms for each output as, for instance, latching, timing, interlocking, ORing and so on (D6);
- it drives outputs, if necessary by power modules, if heavy loads, both resistive and inductive, have to be driven (D7). These power modules, realized using N-channel MOSFET transistors, offer the ability to monitorize the load current, in order to switch off automatically the module if an overcoming of current limits occurs;
- if necessary, it provides to process data in order to interface them with external check system (D8).

## Claims

1. An electromagnetic signal transmission system between a control board on a steering wheel and a remote control unit fixed to a road-vehicle, said electromagnetic signal transmission system comprising:
   - a control unit mounted into said steering wheel, able to manage said key switches, by means of switches interface, control logic; said control unit able to encode and modulate data from said key switches by means of encoder circuit, having an AM modulator; said control unit provided of supply generator, voltage regulator, clock generator, interface circuit able to receive electromagnetic energy via an electromagnetic coupling means, said interface circuit able to send data via the same said electromagnetic coupling means;
   - a remote control unit, fixed onto said road-vehicle, including voltage regulators and supply generators, an oscillator and dividers, a power driver/transmitter, a decoding circuit with data recovery, anti-error circuits, control logic, power modules with current monitoring and enabling circuitry, an interface with remote check system; system, and any other circuit necessary to manage, process and handle the energy/information exchange between said remote control unit and said steering wheel;
   - said power modules, able to monitorize and to control the load current flow, able to switch off said module if current value exceeds a maximum value.

2. An electromagnetic signal transmission system according to claim 1, wherein a variable number of said key switches are mounted on said steering wheel, said key switches grouped on one or more keyboards.

3. An electromagnetic signal transmission system according to claim 1, wherein said secondary exchange module is realized with a PCB means, said PCB mounted on said steering wheel; said primary exchange module realized with another PCB means, said another PCB means mounted on fixed structure around the steering shaft; a signal preamplifier circuit embodied with said primary exchange module; said signal preamplifier circuit able to pick and demodulate signal from a carrier wave, to amplify said signal, to lower the impedance of said signal.

4. An electromagnetic signal transmission system according to claim 1 and 3, wherein both said secondary exchange module and said primary exchange module are realized with copper wire coils, instead of said PCB means.

5. An electromagnetic signal transmission system according to claim 1, wherein the signal outputs outgoing said remote control unit are not passing through said power modules, but said signal outputs are simply driven out by open-collector or by open-emitter transistors means.

6. An electromagnetic signal transmission system according to claim 5, wherein the signal outputs outgoing said remote control unit are recoded, in order to meet specifications of any other external signal transmission system.

FIGURE 1

OFF   〔⟨⟨⟨〕   OFF

ON / OFF   CLIMAT.   ON / OFF   SET / RESUME   RADIO   ON / OFF

CRUISE CONTROL

UP / DOWN   TEMP.   VOLUME   UP / DOWN

UP / DOWN   FAN   TUNING   UP / DOWN

FIGURE 3

# SYSTEM BLOCK DIAGRAM

(A1) (B1) (B2) (B3)

| key-switches matrix | ⟺ | switches interface | ⟺ | control logic | ⟹ | encoding & modulation |

(C11)

-A-KEYBOARD

supply    clk

C1-E.M.COUPLER

-B-STEERING WHEEL CONTROL UNIT

| pwr supply & clock generation | ⟸ | transmit/ /receive interface | ⟺ | secondary exchange module |

(D1) (B4) (D2) (B5) (D3) (C21)

-D-REMOTE CONTROL UNIT

vehicle supply → | voltage regulators & supply | → supply

| oscillator & divider | ⟹ | power driver/ /transmitter | ⟹ | primary exchange module |

(D8)

supply ↓

(D8)

| check system interface | ⟸ | control logic | ⟸ | anti- -error circuitry | ⟸ | decoding & data recovery | ⟸ | signal preamplifier |

C2-E.M.COUPLER

output ↓

(D6) (D5) (D4) (C22)

| power modules with current monitoring and enabling circuitry | (D7)

outputs ↓ ↓ ↓ ↓ ↓ ↓ - - - - - ↓ ↓

FIGURE 4a

F I G U R E 4b

FIGURE 5

FIGURE 6a

FIGURE 6b

FIGURE 7

14

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | DE-A-2 838 138  (BOSCH) <br> * the whole document * | 1,3 | B 60 R 16/02 |
| A | US-A-3 757 050  (MIZOTE) <br> * the whole document * | 1,3,6 | |
| A | EP-A-0 119 350  (SHELLER-GLOBE CORPORATION) <br> * page 2, lines 8 - 29 * <br> * page 3, line 17 - page 4, line 3 * <br> * page 4, lines 14 - 26 * <br> * page 6, line 20 - page 12, line 23 * <br> * page 15, line 26 - page 18, line 4; claims 1-28; figures 1-8 * | 1-3,5 | |
| A | EP-A-0 183 580  (ACIERS ET OUTILLAGE PEUGEOT) <br> * page 2, line 18 - page 3, line 12 * <br> * page 5, line 1 - page 8, line 2; claims 1, 8, 9; figures 1, 4, 5 * | 1,2,4,5 | |
| A | FR-A-2 583 360  (ACIERS ET OUTILLAGE PEUGEOT) <br> * page 2, lines 5 - 28 * <br> * page 3, line 25 - page 4, line 10 * <br> * page 5, line 20 - page 7, line 23; claim 1; figures 1-4 * | 1,2,4 | TECHNICAL FIELDS SEARCHED (Int. Cl.5) |
| A | DE-A-3 306 285  (B & B) <br> * page 7, line 7 - page 12, line 9 * <br> * page 13, line 10 - page 15, line 9; figures 1-5 * | 1,2 | B 60 R |
| A | PATENT ABSTRACTS OF JAPAN vol. 7, no. 226 <br> (E-202)(1371) 07 October 1983, <br> & JP-A-58 115945 (TOYODA) 09 July 1983, <br> * the whole document * | 1,2,4 | |

−/−

The present search report has been drawn up for all claims

| Place of search | Date of completion of search | Examiner |
|---|---|---|
| The Hague | 26 June 91 | GEYER J.L. |

European
Patent Office

**EUROPEAN SEARCH
REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-3 864 578   (LACKEY)<br>* column 2, line 37 - column 4, line 57 *<br>* column 5, line 20 - column 7, line 10 *<br>* column 8, lines 23 - 49; claims 1-25; figures 1-5 *<br>– – – – – | 1,2 | |
| | | | **TECHNICAL FIELDS SEARCHED (Int. Cl.5)** |

The present search report has been drawn up for all claims

| Place of search | Date of completion of search | Examiner |
|---|---|---|
| The Hague | 26 June 91 | GEYER J.L. |

CATEGORY OF CITED DOCUMENTS

X : particularly relevant if taken alone
Y : particularly relevant if combined with another
document of the same catagory
A : technological background
O : non-written disclosure
P : intermediate document
T : theory or principle underlying the invention

E : earlier patent document, but published on, or after
the filing date
D : document cited in the application
L : document cited for other reasons

& : member of the same patent family, corresponding
document